# EUROPEAN PATENT SPECIFICATION

(11) **EP 1 003 313 B1**
(45) Date of publication and mention of the grant of the patent: **17.11.2004**
(21) Application number: 98307353.7
(22) Date of filing: 11.09.1998
(51) Int. Cl.: H04L 29/06, H04N 7/24, A63F 13/12

(54) **Delivering interactive applications**
Ablieferung von Interaktiven Anwendungen
Distribution d'applications interactives

(43) Date of publication of application: 24.05.2000
(73) Proprietor: Two Way Media Limited, London W1W 5NA (GB)
(72) Inventor: Malaure, Jason Robert, Twickenham, Middlesex, TW2 5RN (GB); Cornwell,Simon Anthony Vivian, London,NW3 4SS (GB); Kydd, Richard Andrew, Twickenham, Middlesex TW2 5TT (GB)
(74) Representative: Skone James, Robert Edmund

(56) References cited:
- EP-A- 0 714 684
- WO-A-98/37695
- US-A- 5 446 490
- US-A- 5 797 010

## Description

The present invention relates to a method and apparatus for delivering an interactive application to a plurality of target platforms.

Interactive application providers employ skilled programmers to develop new interactive applications. Examples of such interactive applications are predictive games for use in conjunction with a live sporting broadcast, quiz games for use in conjunction with a live quiz broadcast, on-demand quiz games (ie. not used in conjunction with a live quiz broadcast), home shopping applications and home banking applications.

With the rapid development of new target platforms for interactive services (each employing a broadcast network with a different respective broadcast protocol) it is desirable to deliver the interactive applications over any chosen network in a simple and cost effective way. However conventionally this has been difficult because it has been necessary for the skilled programmers to take into account the different broadcast protocols during development of the new application.

US-A-5,797,010 describes a broadcast system in which different applications to be broadcast require different environments for their execution. Instead of providing set-top processors which have all the data required for each possible application, the system arranges for the execution environment associated with a particular application to be downloaded to a set-top processor first.

WO-A-98/37695 describes a cable television system in which programs and services are connected via a digital switch or multiplexer to a cable system communication network via an interactive cable gateway which converts the data to a suitable format.

"Transcoding Internet Content for Heterogeneous Client Devices", May 1998, J.R. Smith, R. Mohan, Chung-Sheng Li, IEEE International Conference on Circuits and Systems discloses a system for transcoding Internet content into different formats depending upon the nature of the receiving device.

In accordance with a first aspect of the present invention there is provided a method of delivering an interactive application to a plurality of target platforms constituted by respective different broadcast networks, the method comprising
providing a set of application components;
converting the set of application components into a plurality of streams of broadcast data, each stream of broadcast data conforming with a respective broadcast protocol; and
delivering each stream of broadcast data to its respective broadcast network for subsequent delivery to user interfaces.

In accordance with a second aspect of the present invention there is provided apparatus for delivering an interactive application to a plurality of target platforms constituted by respective different broadcast networks, the apparatus comprising
means for providing a set of application components;
a plurality of broadcast systems interfaces each for converting the set of application components into a respective stream of broadcast data, conforming with a respective broadcast protocol; and
means for delivering each stream of broadcast data to its respective broadcast network for subsequent delivery to user interfaces.

Instead of having to provide multiple sets of application components (each set complying with a different respective target platform) the invention allows the programmers to merely provide a single set of application components in any desired format, without needing to know anything about the ultimate target platforms. The broadcast system interfaces (BSIs) then convert the application components shortly before, or during the broadcast.

The invention provides a convenient method of delivering an interactive application to a number of target platforms each having different requirements.

The "open" architecture of the system enables new BSIs to be added when the interactive application is to be delivered to a new target platform.

In the case where the application comprises a real-time application (eg a predictive game for use in conjunction with a live sporting broadcast) the method typically further comprises manually inputting real-time application data;
converting the real-time application data into a plurality of streams of real-time broadcast data, each stream of real-time broadcast data conforming with a respective target platform; and
delivering each stream of real-time broadcast data to its respective target platform.

The application components and/or real-time application data may be generated, converted and broadcast on-the-fly. However preferably the method further comprises storing the application components and/or real-time application data in a data store; and retrieving the application components and/or real-time application data from the data store before converting it into a stream of broadcast data.

A number of conversion steps may be necessary, including translating, substituting, selecting, time managing, or adapting for different data transmission mechanisms.

Provision may also be made for return path processing of return data (eg game-play input or home banking requests) from the target platforms.

An embodiment of the present invention will now be described with reference to the accompanying drawings, in which:
Figure 1 is a schematic functional diagram of an interactive service network;
Figures 2-4 illustrate examples of screen displays presented to an operator during preparation for a live football game;
Figures 5 and 6 illustrate screen displays presented to a remote player of the live football game;
Figure 7 is a schematic diagram illustrating two return data paths; and
Figure 8 is a schematic diagram illustrating the function of the Two Way TV engine.

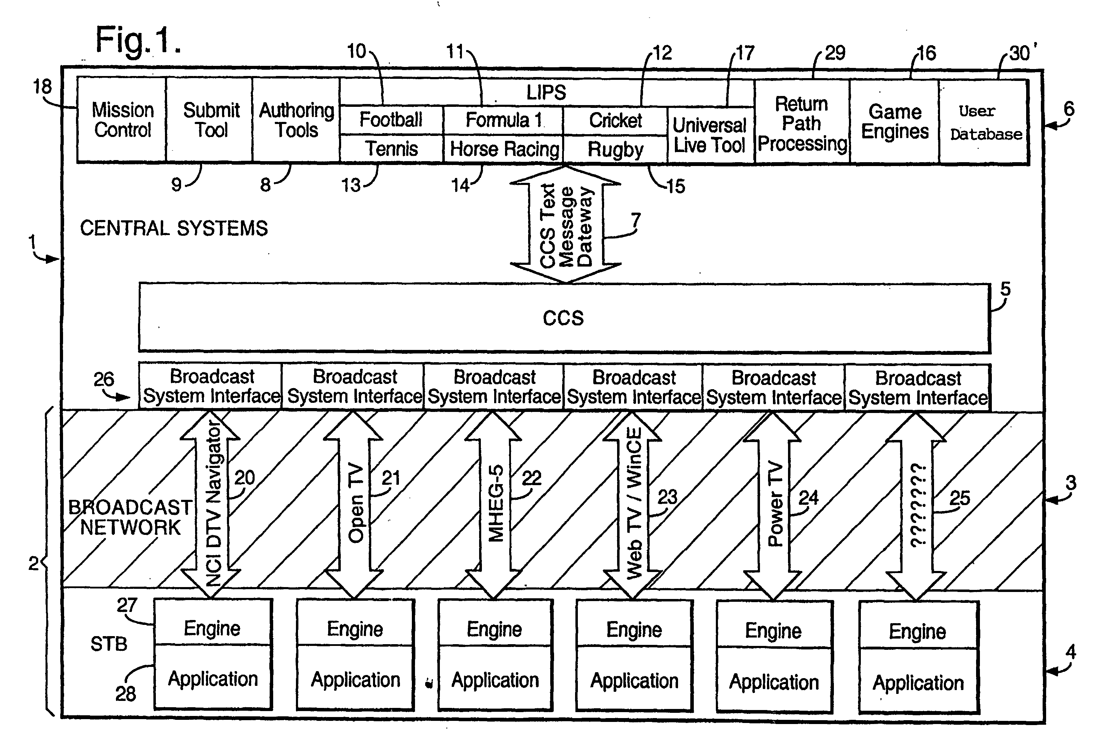

Referring to Figure 1, the network comprises a central system 1 and a number of target platforms 2. Each target platform comprises a respective broadcast network 3 and user interface 4. The central system 1 is controlled by a central computer system (CCS) 5 which comprises a Sun SPARC binary file designed to operate UltraSPARC architecture workstations or servers (not shown). Although the CCS is shown as a single unit it may be split into more than one binary file for performance and distributive requirements.

The CCS 5 communicates with a number of sub-systems 6 via a CCS text message gateway 7.

Authoring tools 8 include suitable tools (eg PCs) which are used by game programmers to develop new interactive applications. The interactive applications may all be very different but in general will include a number of application components such as executable program files, bitmaps, sound samples, real-time data instructions, video clips, and other multimedia and data resources. When the new applications have been developed and tested, the game programmer logs on to a Windows NT™ based submit tool 9 which saves the application components in an application database (not shown).

A number of previously saved applications are shown in Figure 1, namely six interactive, predictive games 10-15 for use in conjunction with a live sporting broadcast and a set of on-demand game engines 16.

A set of Universal Live Tools 17 (which include PCs running Windows NT™ based applications, and suitable input devices) are used by skilled operators to support the live applications 10-15.

A Mission Control system 18 (a Windows NT™ based application) is used by a system control officer to initiate application transmissions and manage real-time broadcasts.

An example of one of the interactive, predictive games (football 10) will be described below. The game is described in more detail in EP-A-0873772. In the interactive football game, remote players are able to attempt to predict certain events prior to commencement of a live football match and can also attempt to predict certain events during the live broadcast.

Initially, prior to commencement of the live broadcast, the football application 10 is initiated by the system control officer using Mission Control 18, and an operator uses the Live Tools 17 to set up certain predetermined information relating to the live broadcast for transmission to the user interfaces 4.

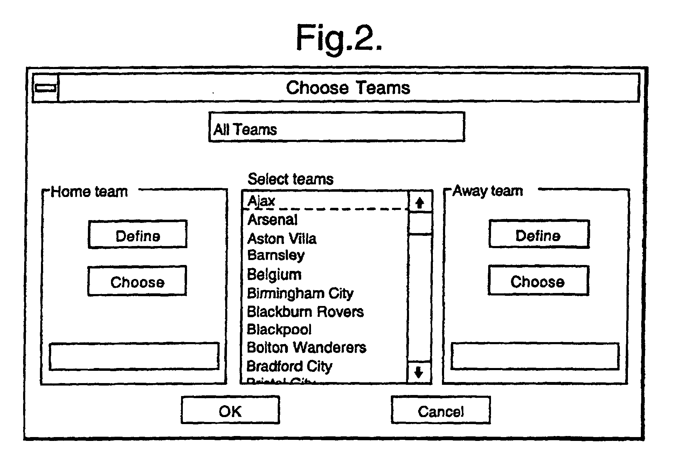

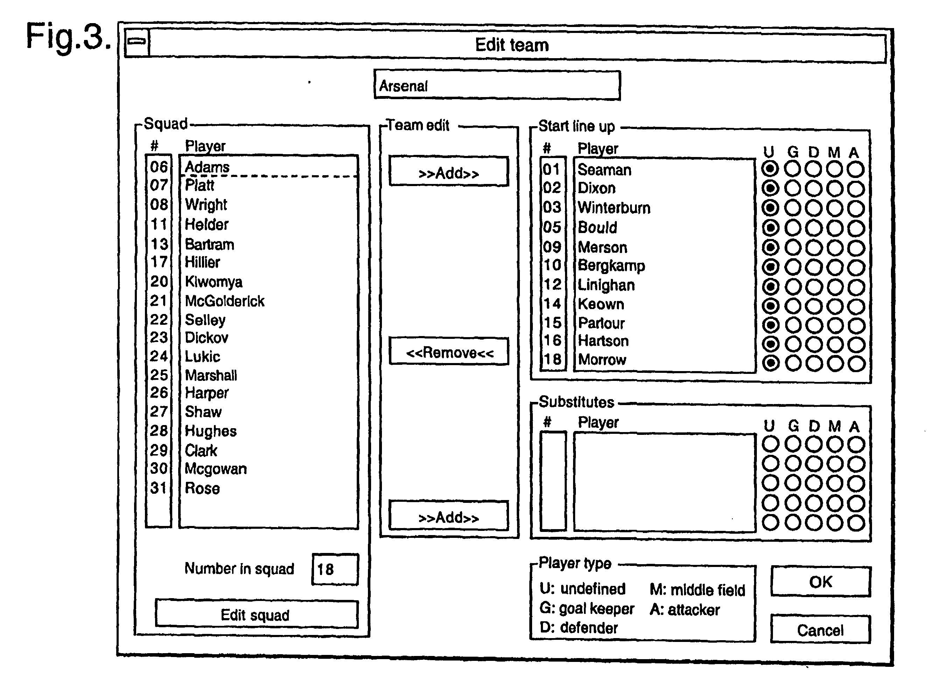

The operator is first presented with a screen as shown in Figure 2 in which he can select a home team and an away team from a list of such teams which have been previously stored in the application database. The operator can select the appropriate home and away teams and then click the OK button. This information is then stored in a Live File store (not shown) associated with the Live Tools 17. The application database stores information relating to each team squad which will typically include more players than those actually selected to play the match. Shortly before commencement of the match, the actual team will be announced and this information will be conveyed to the operator. The operator then causes the Live tools 17 to display all members of the squad of each team (Figure 3) allowing the operator to indicate which members of the squad have been picked to play and at the same time, he can define the type of player, for example goalkeeper, attacker, midfield or defender. Once that information has been indicated, it is then stored in the Live File store.

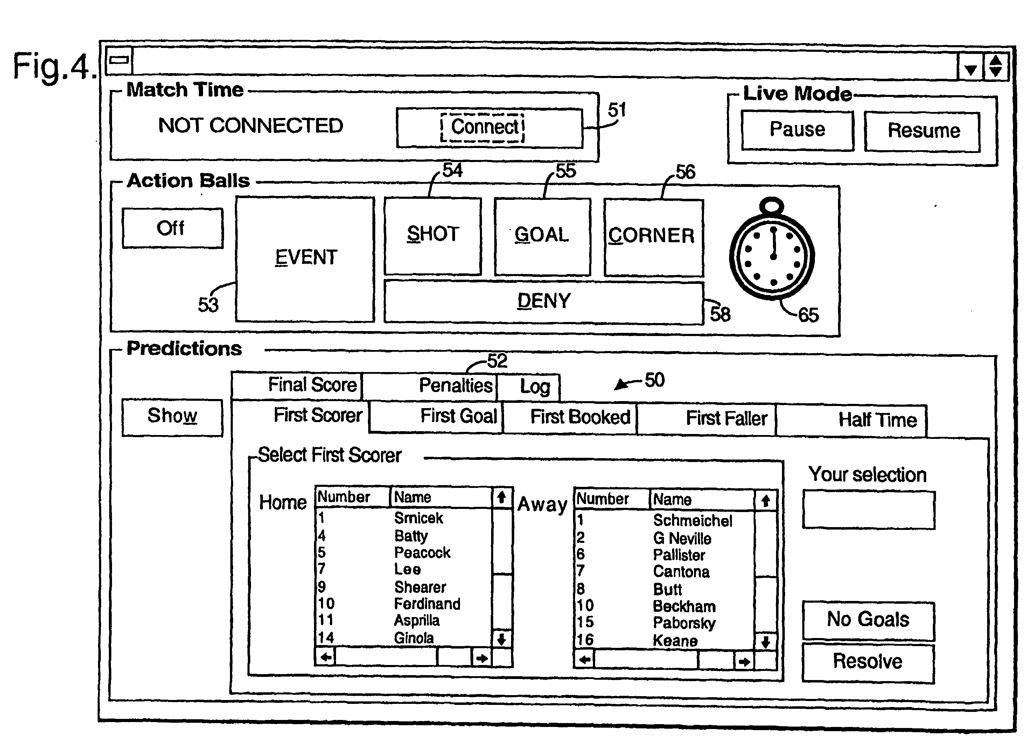

The operator also sets up the particular types of event which can be predicted during the live broadcast. In this example, these events include the time of the first goal, the time of the first booking etc. Examples of such events are indicated by the line of buttons at 50 in Figure 4.

Once all the information for the live broadcast has been set up by the operator, a screen such as that shown in Figure 4 is displayed which at this time is inactive since the interactive game has not commenced. It will be noted, however, that the operator has been able to set up a significant amount of information in advance of the live broadcast itself.

At the appropriate time, but before commencement of the football game, the operator will click the button 51 and the application will then be transmitted to the CCS 5 and broadcast to all the user interfaces 4 over the broadcast network 3 as discussed below. The following application components are broadcast:
1. Real-time data instructions such as "display copyright message at start of football game"; or "display [bit map] at half-time".
2. Executable computer code to be run by the user interfaces to implement the game.
3. Bit maps - eg. player faces, team logos etc.
4. Sounds - eg sampled referee's whistle or crowd noises.
5. Video clips, eg of individual players scoring a goal.
6. Team data - eg team names, player names and player positions.

The central system 1 is designed to be able to deliver applications on any target platform. Five target platforms are illustrated in Figure 1, each employing a different broadcast network, ie. NCI DTV Naviagator 20, OpenTV digital TV 21, MHEG-5 22, WebTV/WinCE 23 and PowerTV 24. The system can also be expanded to handle any number of additional broadcast networks 25. Each broadcast network 20-25 has a respective different broadcast protocol. In order to deal with this problem, each target platform has an associated Broadcast System Interface (BSI) 26 which converts the set of application components associated with each application into a plurality of streams of broadcast data, each stream of broadcast data conforming with the broadcast protocol of its respective target platform. Thus when the operator clicks on button 51, the set of application components (ie. executable program files, bitmaps, sound samples, real-time data instructions, video clips etc.) are passed to the CCS 5 and then fed as parallel data streams to the BSIs 26 which convert the application components as appropriate prior to delivery over a respective broadcast network 3. The BSIs 26 are previously encoded to make any necessary conversions in order to conform the data to their associated target platform. The conversion may (amongst others) include the following techniques:

### Translation

This is the most basic data manipulation. Here the data is converted from an internal representation required by the authoring tools 8 into a representation appropriate to a respective broadcast protocol.

For example, a target platform may only receive ASCII text. In this case the BSI converts all data being transmitted from a binary representation to ASCII.

Translation takes place on a byte-to-byte basis and is the lowest level of transformation employed by the BSIs 26.

### Substitution

In some cases the BSIs will replace application components with an alternative. This is similar to translation, except that substitution is normally done at a component level.

An example of this might take place where a game is being broadcast to two networks where the capabilities of the user interfaces 4 are different. The game being played contains a real-time video component that is delivered to the user interface 4 for display. On one network, the user interface is not capable of storing the video component due to lack of memory and the BSI substitutes the video component with a set of still frames extracted from the video component. On another network the user interface is capable of storing the video component and the BSI delivers the video component unchanged.

In another example a 16-colour bit map is to be delivered and one of the broadcast networks 3 or user interfaces 4 may only be able to support an 8-colour bit map. In this case the BSI converts the bit map into 8-colour format on the fly prior to delivery.

### Selection

In the case of selection, the BSI selects which application components to send or not to send. An example would be an application that contains three different binary files, one for a browser target platform, one for a target platform with an OpenTV broadcast network, and another for a target platform with a PowerTV broadcast network. The BSI associated with the OpenTV network would transmit the binary file for the OpenTV network, and ignore the others. The BSIs supporting the other target platforms behave in a similar way.

### Timing

Different broadcast networks delivering the same programme are not necessarily temporally synchronised. Differences in timing may be up to one or two seconds, indeed set top boxes on different networks would generally have slight variances in their clocks, ie a box on one network may think that the time is 12:34.00 whilst a box on another network may believe it is 12:34.03. In addition to different networks having different clocks it is also a fact that different networks may not be broadcasting content at exactly the same time, ie a video program may start up to 1 or 2 seconds later on another network even though the clocks are the same.

In order to manage these anomalies between networks it is necessary for the BSI handling that network to compensate by introducing the required delay, either by delaying the broadcast of messages, or more appropriately by altering the timing information within messages.

Some networks do not provide a synchronised clock on all set top boxes. In these cases it is necessary for the BSI handling those networks to provide a clock message which the user interface may use to update its own synchronised clock.

### Data Transmission Mechanisms

Different broadcast networks will probably use different techniques for transmission. Some may present a single large bandwidth download path for all data, some may provide a high bandwidth mechanism for application components, and a smaller bandwidth mechanism for real-time data. In all of these cases the BSI will manage the different transmission techniques.

Exploring the above example in more detail, it is likely that a browser based architecture would provide some mechanism for providing application components from the service provider's server, using a carousel for example. In this scenario browser BSI would forward all game components to the server to be placed on the carousel. The binary data messages would most likely be fed to the server which would then use IP tunnelling or similar to transmit the data to the user interfaces.

In the case of the MPEG-II system the BSI would produce MPEG-II transmit packets contains MPEG-II private data sections containing the binary data messages and the component downloads in a defined format.

The user interfaces 4 each include a Two Way TV engine 27 which decodes incoming data and presents it to an application processor 28 which runs executable program code and also incorporates suitable memory for storing data. Items 27,28 are typically provided in a set-top-box (STB) which is connected to a conventional home TV set. Alternatively items 27,28 may be part of a personal computer. Although only a single user interface 27,28 is shown in Figure 1 with each broadcast network 20-25, it will be appreciated that each network 20-25 will broadcast to a large number of user interfaces.

In a commercial broadcast such as cable, satellite or the internet, the application processors 28 (in the form of set top boxes or personal computers) may have different capabilities. It is possible that the processors 28 may have different graphical abilities (such as colour depth, background mpeg and bitmap formats), different amounts of RAM and differing audio capabilities.

It is not desirable to target the lowest capability processor only, as customers who have payed more for a more powerful decoder should reap the benefits.

Therefore in order to provide the highest quality of interactivity on any given processor it is necessary to create applications which can selectively use different display models, colour depths, sounds and bitmaps. In addition different sections of code may be used for different processors. The Two Way TV engines 27 are able to interrogate the capabilities of the application processors 28 at runtime and dynamically decide which components of the broadcast applications to utilise.

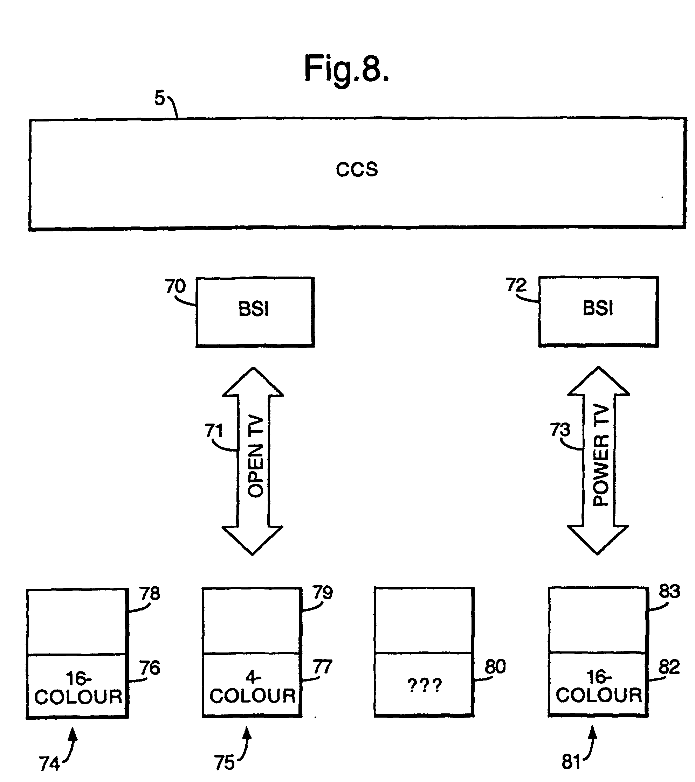

The function of the Two Way TV engines 27 is illustrated in more detail in the example of Figure 8. In this case a broadcast system interface 70 is encoded to convert the application components into the format required by an Open TV digital TV broadcast network 71. A second BSI 72 converts the application components into the format required by a PowerTV broadcast network 73. Two types of user interface 74,75 are connected to the open TV network 71. User interface 74 includes an application processor 76 which can support 16-colour bitmaps. In contrast, user interface 75 includes an application processor 77 which can only support 4-colour bitmaps. The BS1 70 delivers 4-colour and 16-colour bitmaps over the network 71. Each user interface 74,75 has a respective Two Way TV engine 78,79. The engine 78 interrogates the application processor 76 and determines that the processor can support 16-colour bitmaps, and so downloads the 16-colour bitmaps on to the processor 76. In contrast, the engine 79 downloads the 4-colour bitmaps and discards the 16-colour bitmaps.

Bitmaps are a relatively simple example, code modules are more complex. For instance one type of user interface may use a store and forward return path mechanism, whilst another (on the same network) may use an instant access high bandwidth modem. Depending on which, the engine 27 would have to load and link the corresponding code module.

The Two Way TV engines 27,78,79 are generic items of code (i.e. the same engine is provided with each user interface). This enables the system to be easily expanded to deal with a new application processor 28 with different capabilities.

The engines 27,78,79 may either by previously provided in a user's personal computer or set-top-box, or may be broadcast over the broadcast network 3 before broadcast of the application components.

Returning to Figure 8, only a single type of user interface 81 is supported on network 73. In this case, the BS1 72 broadcasts 16-colour bitmaps only, and the engine 83 downloads the 16-colour bitmaps to the processor 82. Therefore in this case the engine 83 is effectively "transparent" as far as the 16-colour bitmaps are concerned.

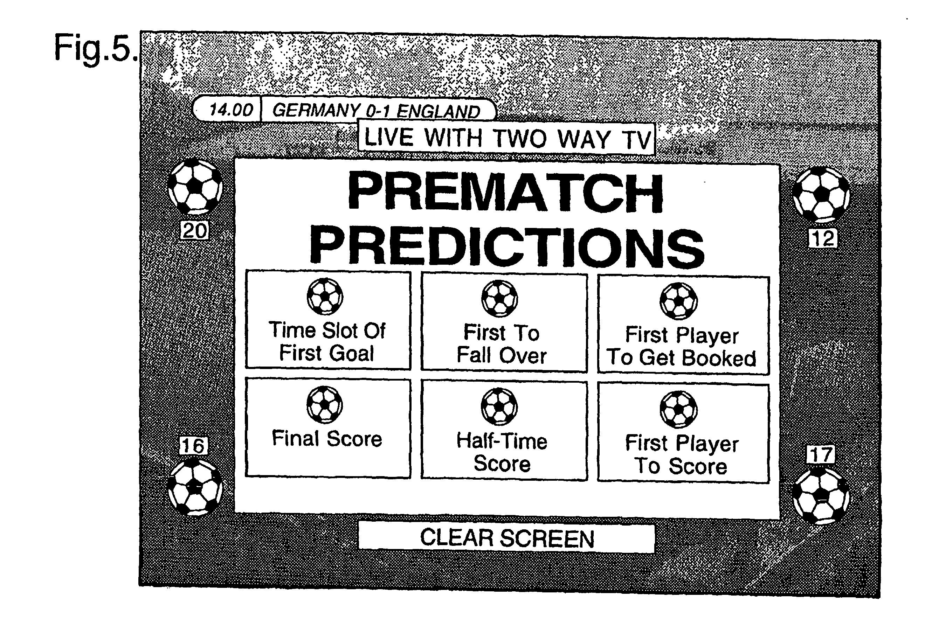

When the application has been downloaded to the user interfaces 4, the interfaces display a screen similar to that shown in Figure 5. This indicates to the player the type of prediction which he can attempt. A comparison of Figures 4 and 5 will show that six of the events selected by the operator for prediction set out in the line 50 are displayed on the display of Figure 5.

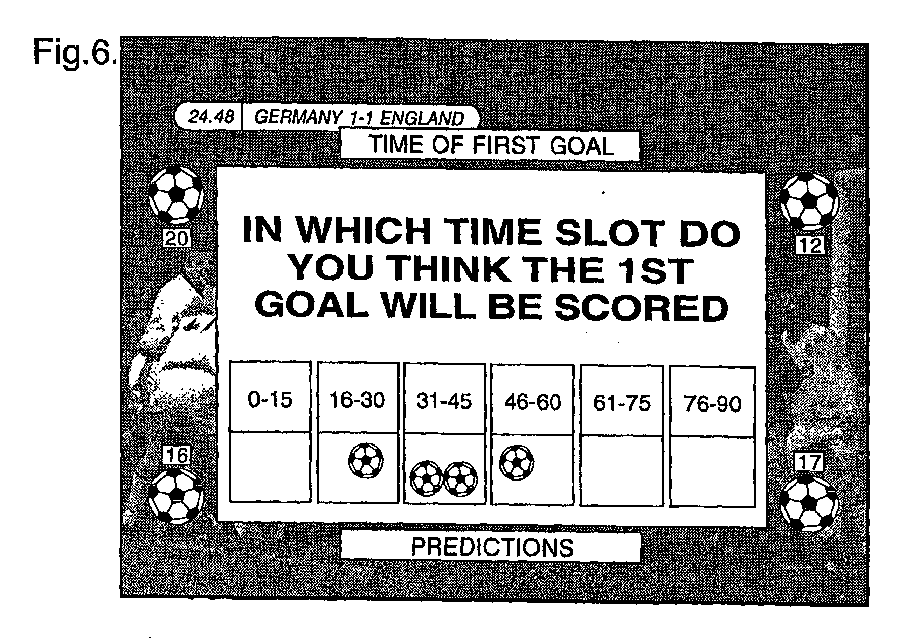

The remote player can then select one or more of the predictions. For example, if he selects the "Time Slot of First Goal", the screen shown in Figure 6 will be displayed which defines six different 15 minute periods during the playing of a football game. The player can then indicate one of those periods, for example, the period 16-30 minutes, and this prediction is then stored in memory. In a similar way, the player can predict any one or more of the other items set out in Figure 5.

As the game develops, various events may or will occur. For example, when the first goal is scored, the operator clicks on an appropriate button and the information is then transmitted to the user interfaces 4.

During and/or after a game, the user interfaces 4 compare the associated player's predictions with the actual events. If the local player was successful in his prediction then the user interface 4 will indicate this to the player and will also pass that information via a suitable return path (eg the public switched telephone network) to the CCS 5 where it is handled by suitable return path processing 29.

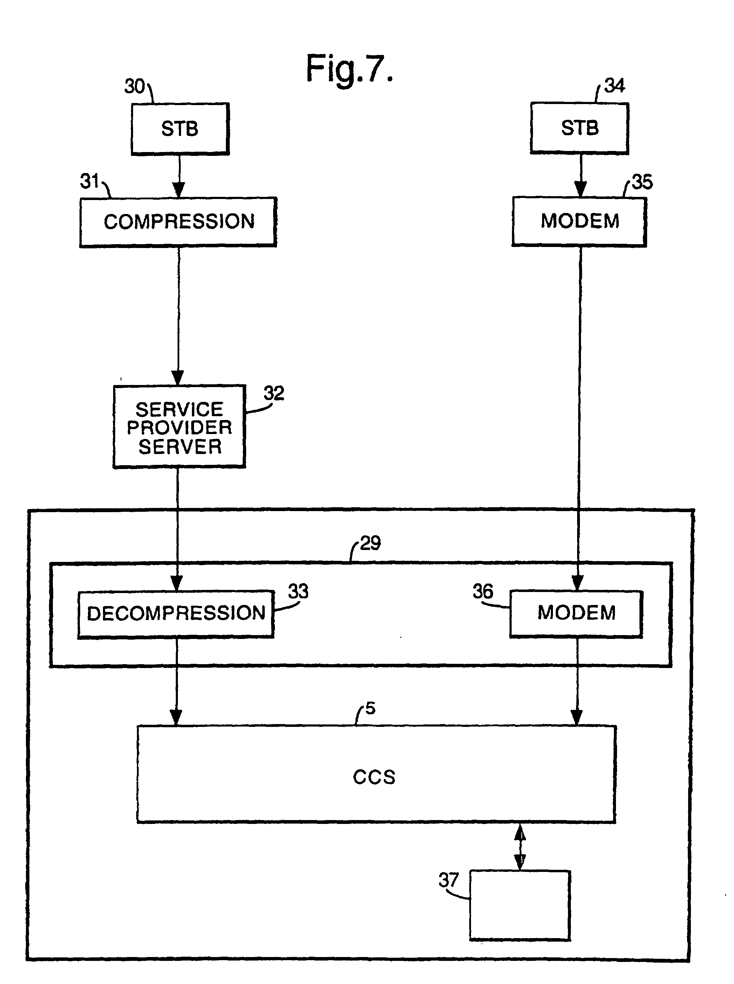

An example of the return path processing 29 is illustrated in Figure 7. STB 30 is connected to a cable modem 31 which compresses the return data prior to transmitting it over a cable network to a cable service provider server 32. The return path processing 29 includes a decompressor 33 which decompresses the data into a form suitable for the CCS 5. STB 34 is connected to a modem 35 which transmits the return path data to a modem 36 in the return path handling system 29 over the conventional public switched telephone network (PSTN). Once the return data has been converted by the return path processing system 29, it is processed by the CCS 5 which provides standard scoring and voting facilities. For instance the users playing the football game may each have an individual score which is stored in a user database 30' and updated by the CCS 5 when the user makes a correct prediction. Alternatively the return path data may be used by the CCS 5 to register votes from the user interfaces. The return path processing facilities provided by the CCS may be augmented by a plug-in processing application 37. For instance a programmer can develop a new game which requires overall results or league positions to be broadcast back to the user interfaces and a suitable plug-in processing application 37 can be installed by the programmer. In some applications, however, return path communication with the CCS 5 is not necessary.

## Claims

1. A method of delivering an interactive application to a plurality of target platforms (2) constituted by respective different broadcast networks (3), the method comprising
providing a set of application components;
converting the set of application components into a plurality of streams of broadcast data, each stream of broadcast data conforming with a respective broadcast protocol; and
delivering each stream of broadcast data to its respective broadcast network (3) for subsequent delivery to user interfaces (4).

2. A method according to claim 1 further comprising manually inputting real-time application data;
converting the real-time application data into a plurality of streams of real-time broadcast data, each stream of real-time broadcast data conforming with a respective broadcast protocol (2); and
delivering each stream of real-time broadcast data to its respective target platform (2).

3. A method according to any of the preceding claims further comprising storing the application components and/or real-time application data in a data store; and retrieving the application components and/or real-time application data from the data store before converting it into a stream of broadcast data.

4. A method according to any of the preceding claims wherein the step of converting comprises translating, substituting, selecting, time managing, or adapting for different data transmission mechanisms.

5. A method according to any of the preceding claims further comprising receiving and processing return data from one or more of the target platforms (2).

6. A method according to claim 5 wherein the application comprises a game and the return data comprises game-play input.

7. A method according to any of the preceding claims wherein each target platform (2) includes an application processor (28).

8. A method according to claim 7 further comprising interrogating the application processor (28) to determine the data capabilities of the application processor; and downloading data from the stream of broadcast data in accordance with the determined data capabilities of the application processor.

9. A method according to claim 7 or claim 8, wherein each target platform comprises a plurality of application processors.

10. A method according to any of claims 7 to 9, wherein the converting step compensates for timing differences between the broadcast networks (3) in handling the broadcast data so as to temporally synchronise the broadcast data at each application processor.

11. A method according to claim 10, wherein the compensation is achieved by selectively delaying broadcast of data to the target platforms.

12. A method according to claim 10, wherein the compensation is achieved by including timing information in the broadcast data.

13. A method according to any of the preceding claims, wherein the application components comprise one or more of executable program files, bitmaps, sound samples, real-time data instructions, video clips.

14. Apparatus for delivering an interactive application to a plurality of target platforms (2) constituted by respective different broadcast networks (3), the apparatus comprising
means (6) for providing a set of application components;
a plurality of broadcast systems interfaces (26) each for converting the set of application components into a respective stream of broadcast data, conforming with a respective broadcast protocol; and
means (20-25) for delivering each stream of broadcast data to its respective broadcast network (3) for subsequent delivery to user interfaces.

15. Apparatus according to claim 14, wherein each target platform (2) comprises an application processor.

16. Apparatus according to claim 15, wherein each target platform (2) comprises a plurality of application processors.

17. Apparatus according to claim 15 or claim 16, wherein the broadcast systems interfaces have means for compensating for timing differences between the broadcast networks (3) in handling the broadcast data so as to temporally synchronise the broadcast data at each application processor.

18. Apparatus according to claim 17, wherein the broadcast systems interfaces have means for carrying out the compensation step by selectively delaying the broadcast of data to the target platforms (2).

19. Apparatus according to claim 17, wherein the broadcast systems interfaces have means for carrying out the compensation step by including timing information in the broadcast data.

## Patentansprüche

1. Verfahren zum Liefern einer interaktiven Anwendung an mehrere Zielplattformen (2), die aus entsprechenden verschiedenen Ausstrahlungsnetzen (3) bestehen, wobei das Verfahren die folgenden Schritte aufweist:
Vorsehen eines Satzes von Anwendungskomponenten;
Konvertieren des Satzes von Anwendungskomponenten in mehrere Ströme von Ausstrahlungsdaten, wobei jeder Strom von Ausstrahlungsdaten einem entsprechenden Ausstrahlungsprotokoll gemäß ist; und
Liefern jedes Stroms von Ausstrahlungsdaten an sein entsprechendes Ausstrahlungsnetz (3) zur nachfolgenden Lieferung an Benutzerschnittstellen (4).

2. Verfahren nach Anspruch 1, weiter mit den folgenden Schritten: manuelles Eingeben von Echtzeit-Anwendungsdaten;
Konvertieren der Echtzeit-Anwendungsdaten in mehrere Ströme von Echtzeit-Ausstrahlungsdaten, wobei jeder Strom von Echtzeit-Ausstrahlungsdaten einem entsprechenden Ausstrahlungsprotokoll (2) gemäß ist; und
Liefern jedes Stroms von Echtzeit-Ausstrahlungsdaten an seine entsprechende Zielplattform (2).

3. Verfahren nach einem der vorhergehenden Ansprüche, weiter mit den folgenden Schritten: Speichern der Anwendungskomponenten und/oder Echtzeit-Anwendungsdaten in einem Datenspeicher; und Abrufen der Anwendungskomponenten und/oder Echtzeit-Anwendungsdaten vom Datenspeicher vor ihrer Konvertierung in einen Strom von Ausstrahlungsdaten.

4. Verfahren nach einem der vorhergehenden Ansprüche, bei dem der Schritt des Konvertierens das Übersetzen, Ersetzen, Auswählen, Zeitverwalten oder Anpassen an unterschiedliche Datenübertragungsmechanismen umfasst.

5. Verfahren nach einem der vorhergehenden Ansprüche, weiter mit dem Empfangen und Verarbeiten von Rückdaten von einer oder mehreren der Zielplattformen (2).

6. Verfahren nach Anspruch 5, bei dem die Anwendung ein Spiel umfasst und die Rückdaten Spieleingaben umfassen.

7. Verfahren nach einem der vorhergehenden Ansprüche, bei dem jede Zielplattform (2) einen Anwendungsprozessor (28) aufweist.

8. Verfahren nach Anspruch 7, weiter mit den folgenden Schritten: Abfragen des Anwendungsprozessors (28) zum Feststellen der Datenfähigkeiten des Anwendungsprozessors; und Herunterladen von Daten aus dem Strom von Ausstrahlungsdaten in Übereinstimmung mit den festgestellten Datenfähigkeiten des Anwendungsprozessors.

9. Verfahren nach Anspruch 7 oder Anspruch 8, bei dem jede Zielplattform mehrere Anwendungsprozessoren umfasst.

10. Verfahren nach einem der Ansprüche 7 bis 9, bei dem der Konvertierungsschritt Zeitdifferenzen zwischen Ausstrahlungsnetzen (3) bei der Handhabung der Ausstrahlungsdaten kompensiert, um so die Ausstrahlungsdaten bei jedem Anwendungsprozessor zeitlich zu synchronisieren.

11. Verfahren nach Anspruch 10, bei dem die Kompensation durch selektives Verzögern der Ausstrahlung von Daten an die Zielplattformen erzielt wird.

12. Verfahren nach Anspruch 10, bei dem die Kompensation durch das Einfügen von Zeitabstimmungsinformation in die Ausstrahlungsdaten erzielt wird.

13. Verfahren nach einem der vorhergehenden Ansprüche, bei dem die Anwendungskomponenten eine oder mehrere ausführbare Programmdateien, Bitmaps, Klangsamples, Echtzeit-Datenbefehle, Videoclips umfassen.

14. Vorrichtung zum Liefern einer interaktiven Anwendung an mehrere Zielplattformen (2), die aus entsprechenden unterschiedlichen Ausstrahlungsnetzen (3) bestehen, wobei die Vorrichtung umfasst:
Mittel (6) zum Vorsehen eines Satzes von Anwendungskomponenten; mehrere Ausstrahlungssystemschnittstellen (26), von denen jede zum Konvertieren des Satzes von Anwendungskomponenten in einen entsprechenden Strom von Ausstrahlungsdaten dient, der einem entsprechenden Ausstrahlungsprotokoll gemäß ist; und
Mittel (20-25) zum Liefern eines jeden Stroms vom Ausstrahlungsdaten an sein entsprechendes Ausstrahlungsnetz (3) zur nachfolgenden Ausstrahlung an Benutzerschnittstellen.

15. Vorrichtung nach Anspruch 14, bei der jede Zielplattform (2) einen Anwendungsprozessor umfasst.

16. Vorrichtung nach Anspruch 15, bei der jede Zielplattform (2) mehrere Anwendungsprozessoren umfasst.

17. Vorrichtung nach Anspruch 15 oder Anspruch 16, bei der die Ausstrahlungssystemschnittstellen Mittel zum Kompensieren von Zeitabstimmungsdifferenzen zwischen den Ausstrahlungsnetzen (3) bei der Handhabung der Ausstrahlungsdaten aufweisen, um die Ausstrahlungsdaten bei jedem Anwendungsprozessor zeitlich zu synchronisieren.

18. Vorrichtung nach Anspruch 17, bei der die Ausstrahlungssystemschnittstellen Mittel zum Durchführen des Kompensationsschrittes durch selektives Verzögern der Ausstrahlung von Daten an die Zielplattformen (2) aufweisen.

19. Vorrichtung nach Anspruch 17, bei der die Ausstrahlungssystemschnittstellen Mittel zum Durchführen des Kompensationsschritts durch Einfügen von Zeitabstimmungsinformation in die Ausstrahlungsdaten aufweisen.

## Revendications

1. Procédé de distribution d'une application interactive à une pluralité de plates-formes cibles (2) constituées de différents réseaux de diffusion respectifs (3), le procédé comprenant :
la fourniture d'un ensemble de composantes d'application ;
la conversion de l'ensemble de composantes d'application en une pluralité de flux de données de diffusion, chaque flux de données de diffusion correspondant à un protocole de diffusion respectif ; et
la distribution de chaque flux de données de diffusion à son réseau de diffusion respectif (3) pour distribution ultérieure à des interfaces utilisateurs (4).

2. Procédé selon la revendication 1, comprenant en outre une entrée manuelle de données d'application en temps réel ;
la conversion des données d'application en temps réel en une pluralité de flux de données de diffusion en temps réel, chaque flux de données de diffusion en temps réel correspondant à un protocole de diffusion respectif ; et
la distribution de chaque flux de données de diffusion en temps réel à sa plate-forme cible respective (2).

3. Procédé selon l'une quelconque des revendications précédentes, comprenant en outre le stockage des composantes d'application et/ou des données d'application en temps réel dans un magasin de données ; et la récupération des composantes d'application et/ou des données d'application en temps réel du magasin de données avant de les convertir en un flux de données de diffusion.

4. Procédé selon l'une quelconque des revendications précédentes, dans lequel l'étape de conversion comprend la conversion, la substitution, la sélection, la gestion du temps ou l'adaptation à différents mécanismes de transmission de données.

5. Procédé selon l'une quelconque des revendications précédentes, comprenant en outre la réception et le traitement de données de retour en provenance de l'une ou de plusieurs des plates-formes cibles (2).

6. Procédé selon la revendication 5, dans lequel l'application comprend un jeu et les données de retour comprennent une entrée en cours de jeu.

7. Procédé selon l'une quelconque des revendications précédentes, dans lequel chaque plate-forme cible (2) comprend un processeur d'applications (28).

8. Procédé selon la revendication 7, comprenant en outre l'interrogation du processeur d'applications (28) pour déterminer les capacités de données du processeur d'applications ; et le téléchargement de données en provenance du flux de données de diffusion en fonction des capacités de données déterminées du processeur d'applications.

9. Procédé selon la revendication 7 ou 8 dans lequel chaque plate-forme cible comporte une pluralité de processeurs d'applications.

10. Procédé selon l'une quelconque des revendications 7 à 9, dans lequel l'étape de conversion compense les différences de synchronisation entre les réseaux de diffusion (3) dans le traitement des données de diffusion de façon à synchroniser dans le temps les données de diffusion à chaque processeur d'applications.

11. Procédé selon la revendication 10, dans lequel la compensation est réalisée en retardant sélectivement la diffusion de données aux plates-formes cibles.

12. Procédé selon la revendication 10, dans lequel la compensation est réalisée en incluant des informations de synchronisation dans les données de diffusion.

13. Procédé selon l'une quelconque des revendications précédentes, dans lequel les composantes d'application comprennent un ou plusieurs fichiers de programmes exécutables, images pixélisées, échantillons de son, instructions de données en temps réel, clips vidéo.

14. Appareil de distribution d'une application interactive à une pluralité de plates-formes cibles (2) constituées de différents réseaux de diffusion respectifs (3), l'appareil comprenant :
des moyens (6) de fourniture d'un ensemble de composantes d'application ;
une pluralité d'interfaces de systèmes de diffusion (26), chacune étant destinée à convertir l'ensemble de composantes d'application en un flux respectif de données de diffusion, correspondant à un protocole de diffusion respectif ; et
des moyens (20-25) de distribution de chaque flux de données de diffusion à son réseau de diffusion respectif (3) pour distribution ultérieure à des interfaces utilisateurs.

15. Appareil selon la revendication 14, dans lequel chaque plate-forme cible (2) comprend un processeur d'applications.

16. Appareil selon la revendication 15, dans lequel chaque plate-forme cible (2) comprend une pluralité de processeurs d'applications.

17. Appareil selon la revendication 15 ou 16, dans lequel les interfaces des systèmes de diffusion comportent des moyens de compensation des différences de synchronisation entre les réseaux de diffusion (3) dans le traitement des données de diffusion pour synchroniser dans le temps les données de diffusion à chaque processeur d'applications.

18. Appareil selon la revendication 17, dans lequel les interfaces des systèmes de diffusion comportent des moyens pour effectuer l'étape de compensation en retardant sélectivement la diffusion des données aux plates-formes cibles (2).

19. Appareil selon la revendication 17, dans lequel les interfaces des systèmes de diffusion comportent des moyens pour effectuer l'étape de compensation par inclusion d'informations de synchronisation dans les données de diffusion.
